# EUROPEAN PATENT APPLICATION

(11) **EP 4 550 268 A1**
(43) Date of publication of application: **07.05.2025**
(21) Application number: 23208043.2
(22) Date of filing: 06.11.2023
(51) Int. Cl.: G06T 7/73

(54) **MODEL SCALING**

(71) Applicant: Helsing GmbH, 81671 Munich (DE)
(72) Inventor: EBERHARD, Thomas, 81671 Munich (DE)
(74) Representative: Rummler, Felix

(57) **Abstract**

According to one aspect of the present disclosure, there is provided a computer-implemented method for model scaling, the method comprising: obtaining model data representing a model of an area; obtaining image data of said area; matching the model data against the image data; and determining a scale and/or orientation of the model based on the matching.

## Description

### Field

The present disclosure generally relates to model scaling. In particular, the present disclosure relates to methods, systems and devices for determining the scale and/or orientation of a 3D model of an observed area.

### Background

It is generally known to employ drones in surveying applications. A drone survey refers to the use of a drone, or unmanned aerial vehicle (UAV), to capture aerial data of an area with downward-facing sensors, such as RGB or multispectral cameras. During a drone survey with an RGB camera, the area may be photographed several times from different angles. From such image data, 3D maps of the area can be generated. The process of creating such maps is known as Structure from Motion (SfM).

However, it is difficult to predict the orientation and the scale of the 3D model with respect to the real world. Known approaches are based on GPS data of the drone or (previously installed) GPS reference points within the captured area. This is however not possible in GPS-denied areas.

The present invention aims to provide methods, systems and devices for enabling improved model scaling.

### Summary of the Invention

The present invention is defined in the independent claims. The dependent claims recite selected optional features. In the following, each of the described methods, systems, apparatuses, examples, and aspects, which do not fully correspond to the invention as defined in the claims is thus not according to the invention and is, as well as the whole following description, present for illustration purposes only or to highlight specific aspects or features of the claims.

According to a first aspect of the present disclosure, there is provided a computer-implemented method for model scaling, the method comprising: obtaining model data representing a model of an area; obtaining image data of said area; matching the model data against the image data; and determining a scale and/or orientation of the model based on the matching.

The method is applicable to a model of an area, represented by the model data, that is generated based on any sensor data. In one implementation, the model data is obtained by capturing a plurality of images of the area. The images may be captured by an image sensor mounted to a drone flying over the area. However, other types of sensors may be used, e.g., radar. In any case, the sensor data is processed to obtain and provide the model data in a format such that it can be compared to/matched against the image data.

The model may be a 2D or (preferably) a 3D model. The image data may be obtained by a satellite, but also from other sources, including aerial and surface vehicles such as reconnaissance aircrafts and drones.

The model data and the image data may be obtained at different points in time. For example, the image data may have been obtained at an earlier point in time and stored in a central server, for subsequent retrieval and processing (matching against the model data).

In an embodiment, the method used to determine the scale of the model. However, it can also be used to determine the orientation of the model or verify an estimate of the scale and/or the orientation. Such verification can be made by determining if a number of successfully matched key points exceeds a threshold. If the estimate of the orientation (or scale) of the model is inaccurate, the matching will succeed only for a limited number of key points below the threshold, if at all. For example, if a 2D ground plane of the model is inclined at an angle of, say 45° to up to 90° with respect to a satellite image representing the image data, the matching is likely to fail, thereby enabling a rejection and/or correction of the estimate.

In an embodiment, the method comprises: capturing a plurality of images of said area, in particular a sequence of images of said area; and generating said model based on the plurality of images. Based on the images, in particular key points within the images, a 3D map or model of the captured area is generated. This may be performed remote from the device (e.g., a drone) that contains the camera that captures the images, e.g., at a remote server. Thus, the images may be transmitted to the remote server. Thereby, processing overheads at the device (drone) may be reduced. The process of generating a 3D map or model is known as Structure from Motion (SfM). This process is as such known and therefore not described further.

The method may further comprise generating a 3D model based on the model data, wherein determining the scale of the model comprises determining the scale of the 3D model. In particular, the method comprises: generating a 2D model based on the 3D model; determining a scale of the 2D model; and determining the scale of the 3D model based on the scale of the 2D model. Generating model data that represents a 2D model facilitates a comparison with the image data and matching of selected key (visual) features.

In an embodiment, the 2D model represents at least one 2D top view of the 3D model, wherein the method further comprises: determining a scale of the 2D top view; and determining the scale of the 3D model based on the scale of the 2D top view. A scale of the 2D top view can be determined more accurately and easily, for example by local feature matching and determining matching point pairs between the 2D top view and the image data. The scale of the 2D top view can then be applied to the 3D model.

In an embodiment, the method comprises: generating a plurality of different 2D top views of the 3D model; matching each of the plurality of 2D top views against the image data; selecting one of the 2D top views; and using the selected 2D top view to determine the scale of the 3D model. Ideally, each of the different 2D top views can be matched against the image data. However, the view that has the highest similarity with the image data is selected and used for subsequent processing, i.e., matching and determining the 3D model scale.

In an embodiment, the different 2D top views correspond to different zoom levels. For example, the image data may be obtained by a satellite-based image sensor. The image sensor has a zoom level that may be unknown. Preparing different 2D top views corresponding to different zoom levels enables better matching against satellite images captured at a zoom level that is not known in advance.

In an embodiment, the different 2D top views correspond to different viewing angles. A satellite may deliver images captured at a certain (unknown) viewing angle. By preparing different 2D top views corresponding to different viewing angles, this may be taken into account.

The method may further comprise: selecting the one of the 2D top views that corresponds to a zoom level and/or viewing angle that best matches a zoom level and/or viewing angle associated with the image data. The 2D top view with the zoom level and/or viewing angle that provides the best match with the image data is selected, thereby improving the accuracy of determining the model scale.

In an embodiment, the method comprises estimating an orientation of the 3D model prior to generating the 2D top view. The orientation cannot be reliably estimated based on the 2D top view. Therefore, prior to generating the 2D top view, an orientation of the 3D model is estimated and subsequently taken into account when matching the 2D top view against the image data, thereby improving results.

In an embodiment, the image data and the 2D top view are associated with respective height and/or depth maps, wherein the method further comprises: matching points within the 2D top view against points in the image data using the height and/or depth maps. Using the height and depth maps facilitates determining matching point pairs between the image data and the 2D top view.

In an embodiment, the method comprises matching the position of a first sensor whose signals are used to generate the model data to the position of a second sensor whose signals are used to generate the image data. For example, the first sensor may be mounted to a drone and the second sensor may be mounted to a satellite. Matching the positions of the first and second sensors enables a better alignment or (visually speaking) laying-on-top-of-one-another of images taken by the drone and the satellite.

In an embodiment, the image data is generated by an image sensor of a satellite, and wherein the model data is generated using sensor data obtained by an image sensor of a drone.

According to another aspect of the present disclosure, there is provided a system comprising one or more processing devices and a memory storing instructions which, when executed by the processing devices, cause the computer-implemented method described above to be performed.

According to another aspect of the present disclosure, there is provided a computer program product for loading into a memory of a computer, comprising instructions, that, when executed by a processor of the computer, cause the computer to execute the computer-implemented method described above.

The present disclosure provides a solution for determining the orientation and/or scale of a 3D model based on images captured in a GPS-denied area. In particular, the present disclosure enables georeferencing an SfM model and associated 3D texture model in the real world without markers or GNNS data support. Further, the disclosed approach may be used to verify an estimate of an orientation of a model. The estimate may have been previously obtained using conventional approaches.

### Brief Description of the Drawings

The features, objects, and advantages of the present disclosure will become more apparent from the detailed description set forth below when taken in conjunction with the drawings in which:
Figure 1 is a schematic illustration of the operation of methods and systems for determining the scale of a model according to embodiments of the present disclosure;
Figure 2 illustrates a flow chart of a method for determining the scale of a model according to an embodiment of the present disclosure; and
Figure 3 illustrates a schematic block diagram of a device for determining the scale of a model according to an embodiment of the present disclosure.

### Detailed Description of Exemplary Embodiments

The present disclosure provides new methods, systems and devices for model scaling. In embodiments, images of an observed area are processed to obtain a model of the area. The model is compared with other images of the area to identify matching key points. Based on the comparison, a scale and/or orientation of the model is determined.

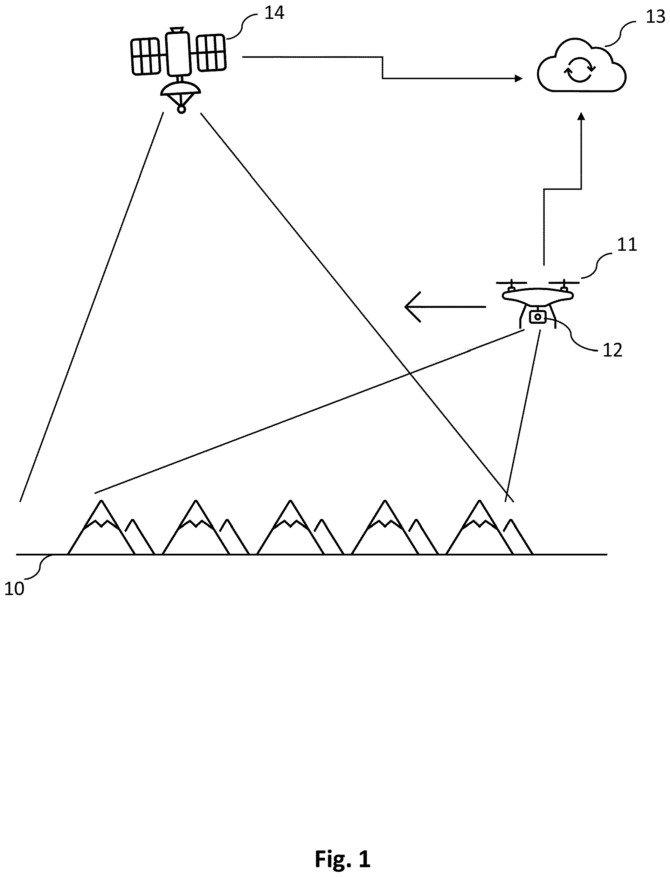

Figure 1 is a schematic illustration of the operation of methods and systems for determining the scale of a model according to embodiments of the present disclosure. Figure 1 shows a landscape that represents an area 10 under surveillance. A drone 11 is operated to fly over the area 10, as indicated by the arrow. The drone 11 has a camera 12 which is controlled to take a series of first images of the area 10 while the drone 11 is flying over the area 10. The first images are transmitted from the drone 11 to a central server 13. The central server 13 includes processing means to process the first images captured by the drones and generate a 3D model of the area. The generation of a 3D model from a sequence of images is as such known and not described in more detail.

A satellite 14 captures one or more second images of the area 10 and transmits the second images to the server 13. The processing means of the server 13 are configured to match the one or more of the second images against the 3D model. In particular, the processing means are configured to identify (visual) key points in the second images that can be matched with corresponding key points in the 3D model (or vice versa). Based on the relationships between matched key points, and the knowledge of the scale of the second (satellite) images, a scale of the 3D model is determined. For example, based on the known scale of the second images, a distance between two key points in the second images can be determined. Based on the distance between the corresponding key points in the 3D model, the scale of the 3D model can be calculated.

It is noted that Figure 1 and the corresponding description represent a simplified example. The present disclosure is not limited to generating a 3D model based on a sequence of drone images. Other sensors and data may be used instead. Similarly, the second images can be obtained by means other than the satellite 13, e.g., by (other) drones. Any type and combination of sensors can be used to obtain the first and second images or corresponding sensor data. The sensors can be visual, acoustic or radar sensors, and/or ground or aerial sensors, and any combination of such sensors. The sensor signals and data may include any one or more of electro-optical, infrared, radar, synthetic aperture radar, LIDAR, acoustic and seismic signals, signal-intelligence data, or the like.

Also, the present disclosure is not limited to 3D models and can be applied to determining the scale of 2D models.

Further, the present disclosure is not limited to determining the scale of a 3D model. Rather, the present disclosure also includes determining an orientation of the 3D model. The term "orientation" is intended to cover one or more aspects of orientation, e.g., tilt and/or pitch. As can be understood from Figure 1, the drone 11 may only be able to capture images of the area 10 from a certain viewing angle. For example, a movement of the drone 11 may be restricted so that the area 10 can only be observed from one side. In such case, a 3D model generated from the captured first images may have a certain orientation, tilt and/or pitch. In contrast, the second images captured by the satellite 14 may represent a top view of the area 10, as can also be understood from Figure 1. By matching key points in the top view satellite images and the tilted model, the tilt angle of the model can be determined. This also applies to the pitch and/or orientation of the model. This can be done independently of, or together with determining the scale of the model.

In an embodiment, before matching corresponding key features in the satellite images and the model, a 2D top view of the 3D model is generated, thereby facilitating the matching process. Accordingly, in an embodiment, the approach can be summarised as follows: First, a 3D model is generated from the first images. Alternatively, a previously generated 3D model based on image sensor data is obtained. Thereafter, a 2D top view of the 3D model is generated. The 2D top view is then matched with the second images from the satellite 14, which represents a top view of the area 10. Finally, based on the matching, the scale, tilt angle and/or orientation of the 3D model is derived from the (known) scale of the 2D (satellite) top view. Accordingly, the present disclosure enables determining the scale of the 3D model without the use of GPS.

In an embodiment, a plurality of 2D views of the 3D model is generated, each having a different zoom level. Each of the 2D views can be matched against the second (satellite) images. The view with the zoom level that best corresponds to the zoom level of the satellite images provides the best matching results and is selected for further processing steps. This approach improves the accuracy of the determined scale and/or orientation of the 3D model.

In an embodiment, an orientation of the 3D model is estimated prior to the generation of the 2D top view(s). This improves the matching process, as - depending on the accuracy of the estimation - the top-view corresponds to what is "seen" by the satellite 14. Thereby, the overall estimation of the 3D model orientation is improved. Further, the estimate of the orientation can be verified and/or adjusted based on the results of the matching process. For example, if the number of matching key points exceeds a threshold, the estimate can be determined to be sufficiently accurate and thus verified.

In an embodiment, a number of slightly inclined 2D top views of the 3D model is used for the matching process, thereby to take into account and/or adjust a possibly inaccurate orientation estimation. Each top view may have a different inclination. The top views may cover a range of inclination angles, e.g., 30°, and the inclination angles may differ by a predetermined amount from one another, e.g. 5°.

In an embodiment, the second images from the satellite 14 are processed to generate a height map (or depth map). This enables determining 3D information of matched points within the generated 2D top view(s) of the 3D model.

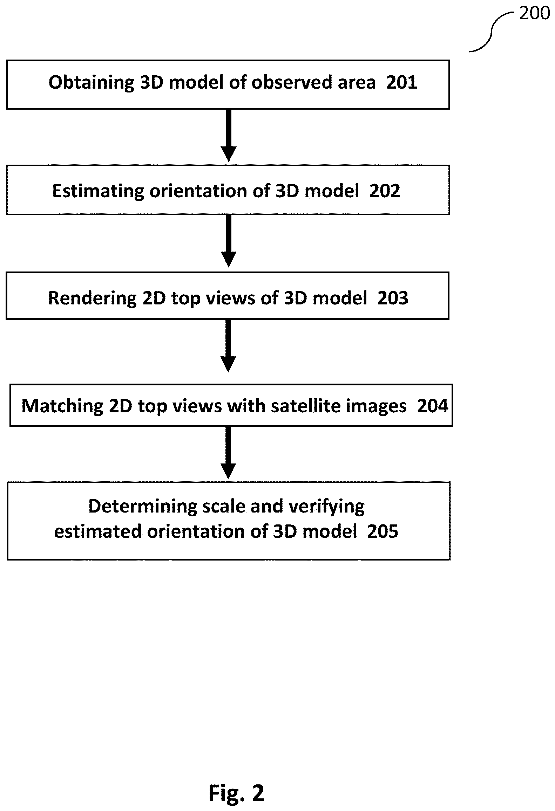

Figure 2 illustrates a flow chart of a method 200 for determining the scale of a model according to an embodiment of the present disclosure. In step 201, a 3D model of an observed area is obtained. The 3D model may be based on images captured by a drone, as described in connection with Figure 1. The 3D model can be generated by applying SfM, as described above. The 3D model may include a point cloud model obtained from SfM and/or a textured model resulting from, e.g., poisson point meshing. The textured 3D model and the point cloud model may share the same coordinate system.

In step 202, an orientation of the 3D model is estimated. This can include segmenting a plane of the area by a planar model in a RANSAC scheme. This provides a rotation around the centre of the point cloud that can be applied to align the planar surface of the textured 3D model with the plane spanned by the north-east axis, for example. Optionally, a user can determine if the selected orientation of the 3D model is inverted up and down. If an inversion is detected by the user, the inversion may be corrected, e.g., by flipping up and down again in the rotation.

In step 203, based on the orientation estimation, a batch of 2D images of the 3D model is rendered. The 2D images represent top-down views of the 3D model at different altitudes of an observer, or at different zoom levels.

In step 204, the 2D images are matched against satellite image data, preferably in an area of an estimated position of the drone 11 (Figure 1). For this purpose, LoFTR can be used to extract matching point pairs between the satellite images and the rendered 2D images. The satellite images can be converted in a UTM encoding to choose a coordinate system where 1m approximately equals 1pixel, for example. This improves the robustness for larger scenes.

In an embodiment, the points are verified by a RANSAC scheme that uses a homography matrix as model that can only represent shift, rotation and scale but not affine or projective components. A threshold is selected for the number of inliers of the RANSAC algorithm. If none of the rendered 2D images reaches the threshold, the process is stopped. Otherwise, the rendered 2D image having the the highest number of inliers is selected.

In an embodiment, a height map and the known latitude and longitude of positions of a given pixel or point in the satellite images is used to obtain a corresponding 3D point in a NED coordinate system centred around the mean of the satellite points. For the corresponding points in the rendered 2D images, for each image, a depth map is generated as output of the construction of the 3D mesh. The depth map and the pixel position are used to compute the pixel position in the SfM coordinate system.

In step 205, the scale and/or orientation of the 3D model is determined. In particular, in an embodiment, this may include using the Algorithm for Closed-Form Solution of Absolute Orientation Using Orthonormal Matrices to obtain the scale translation and rotation between the two coordinate systems. These can then be used to transform the 3D mesh and point cloud into a local NED coordinate system with accurate scale.

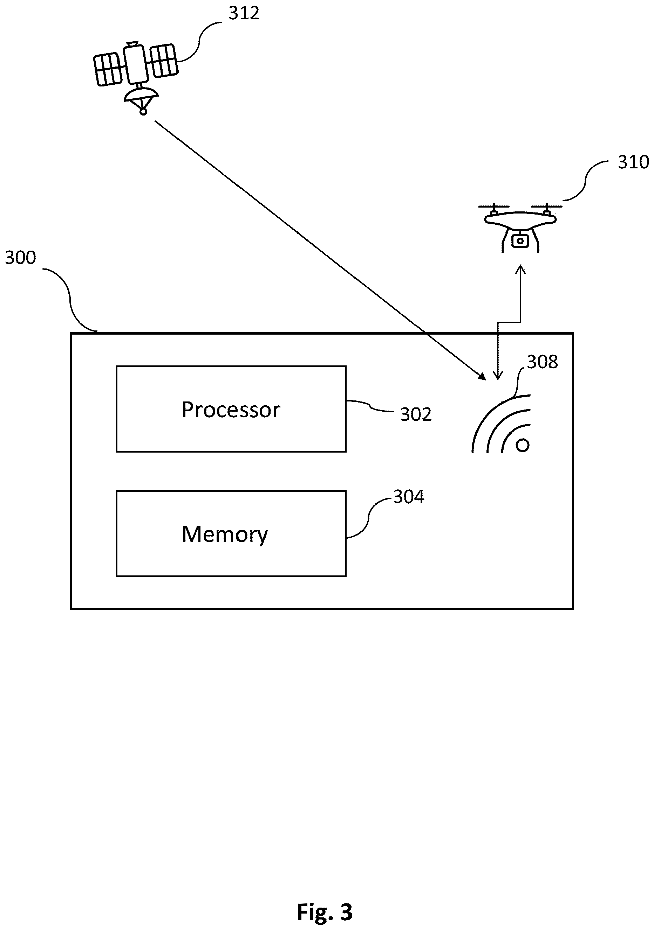

Figure 3 illustrates a schematic block diagram of a device for determining the scale of a model according to an embodiment of the present disclosure. The device 300 comprises at least one processor 302 and a memory 304. The memory 304 can be any type of memory. The device 300 also comprises a receiver/transmitter 308 to enable communications with external sensor devices such as a drone 310 or a satellite 312. The processor 302, memory 304 and receiver/transmitter 308 are communicatively coupled with one another.

The memory 304 stores instructions that, when executed by the processor 302, result in the execution, at least in part, of a method as described above. For example, the device 300 may receive first images of an observed area from the drone 310 and process the first images to generate a 3D model of the area. In addition, the device 300 may receive second images of the area captured by the satellite 312. The 3D model and the second images may be matched against one another, as described above, to determine the scale and/or orientation of the 3D model.

## Claims

1. A computer-implemented method for model scaling, the method comprising:
obtaining model data representing a model of an area;
obtaining image data of said area;
matching the model data against the image data; and
determining a scale and/or orientation of the model based on the matching.

2. The method of claim 1, comprising:
capturing a plurality of images of said area, in particular a sequence of images of said area; and
generating said model based on the plurality of images.

3. The method of any preceding claim 1 or 2, further comprising generating a 3D model based on the model data, wherein determining the scale of the model comprises determining the scale of the 3D model.

4. The method of claim 3, comprising:
generating a 2D model based on the 3D model;
determining a scale of the 2D model; and
determining the scale of the 3D model based on the scale of the 2D model.

5. The method of claim 4, wherein the 2D model represents at least one 2D top view of the 3D model, the method comprising:
determining a scale of the 2D top view; and
determining the scale of the 3D model based on the scale of the 2D top view.

6. The method of claim 5, comprising:
generating a plurality of different 2D top views of the 3D model;
matching each of the plurality of 2D top views against the image data;
selecting one of the 2D top views; and
using the selected 2D top view to determine the scale of the 3D model.

7. The method of claim 6, wherein the different 2D top views correspond to different zoom levels.

8. The method of claim 6 or 7, wherein the different 2D top views correspond to different viewing angles.

9. The method of claim 7 or 8, comprising: selecting the one of the 2D top views that corresponds to a zoom level and/or viewing angle that best matches a zoom level and/or viewing angle associated with the image data.

10. The method of any of claims 3 to 9, comprising estimating an orientation of the 3D model prior to generating the 2D top view.

11. The method of any of claims 3 to 10, wherein the image data and the 2D top view are associated with respective height and/or depth maps, the method comprising: matching points within the 2D top view against points in the image data using the height and/or depth maps.

12. The method of any preceding claim, comprising matching the position of a first sensor whose signals are used to generate the model data to the position of a second sensor whose signals are used to generate the image data.

13. The method of any preceding claim, wherein the image data is generated by an image sensor of a satellite, and wherein the model data is generated using sensor data obtained by an image sensor of a drone.

14. A system comprising one or more processing devices and a memory storing instructions which, when executed by the processing devices, cause the computer-implemented method of any preceding claim to be performed.

15. A computer program product for loading into a memory of a computer, comprising instructions, that, when executed by a processor of the computer, cause the computer to execute the computer-implemented method of any of claims 1 to 13.

## Amended claims

### Amended claims in accordance with Rule 137(2) EPC.

1. A computer-implemented method (200) for model scaling, the method comprising:
obtaining (201) model data representing a model of an area;
obtaining image data of said area;
matching (204) the model data against the image data;
determining (205) a scale and/or orientation of the model based on the matching,
**characterised in that** the method further comprises:
generating a 3D model based on the model data;
generating a 2D model based on the 3D model, wherein the 2D model represents at least one 2D top view of the 3D model, and the image data and the 2D top view are associated with respective height and/or depth maps; and
matching points within the 2D top view against points in the image data using the height and/or depth maps.

2. The method (200) of claim 1, comprising:
capturing a plurality of images of said area, in particular a sequence of images of said area; and
generating said model based on the plurality of images.

3. The method (200) of any preceding claim 1 or 2, wherein determining (205) the scale of the model comprises determining the scale of the 3D model.

4. The method (200) of claim 3, comprising:
determining a scale of the 2D model; and
determining the scale of the 3D model based on the scale of the 2D model.

5. The method of (200) claim 4, comprising:
determining a scale of the 2D top view; and
determining the scale of the 3D model based on the scale of the 2D top view.

6. The method (200) of claim 5, comprising:
generating a plurality of different 2D top views of the 3D model;
matching (204) each of the plurality of 2D top views against the image data;
selecting one of the 2D top views; and
using the selected 2D top view to determine the scale of the 3D model.

7. The method (200) of claim 6, wherein the different 2D top views correspond to different zoom levels.

8. The method (200) of claim 6 or 7, wherein the different 2D top views correspond to different viewing angles.

9. The method (200) of claim 7 or 8, comprising: selecting the one of the 2D top views that corresponds to a zoom level and/or viewing angle that best matches a zoom level and/or viewing angle associated with the image data.

10. The method (200) of any of claims 3 to 9, comprising estimating an orientation of the 3D model prior to generating the 2D top view.

11. The method (200) of any preceding claim, comprising matching the position of a first sensor whose signals are used to generate the model data to the position of a second sensor whose signals are used to generate the image data.

12. The method (200) of any preceding claim, wherein the image data is generated by an image sensor of a satellite, and wherein the model data is generated using sensor data obtained by an image sensor of a drone.

13. A system (300) comprising one or more processing devices (302) and a memory (304) storing instructions which, when executed by the processing devices, cause the computer-implemented method of any preceding claim to be performed.

14. A computer program product for loading into a memory of a computer, comprising instructions, that, when executed by a processor of the computer, cause the computer to execute the computer-implemented method of any of claims 1 to 12.
